# EUROPÄISCHE PATENTSCHRIFT

(11) **EP 1 818 246 B1**
(45) Veröffentlichungstag und Bekanntmachung des Hinweises auf die Patenterteilung: **30.11.2011**
(21) Anmeldenummer: 07003101.8
(22) Anmeldetag: 14.02.2007
(51) Int. Cl.: B62H 5/14

(54) **Elektronisches Fahrradschloss**
Electronic bicycle lock
Verrou de vélo électronique

(30) Priorität: 14.02.2006 DE 102006006605; 18.08.2006 DE 102006038954
(43) Veröffentlichungstag der Anmeldung: 15.08.2007
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-A1- 1 418 302
- DE-U1- 20 211 241
- JP-A- 11 278 331
- JP-A- 2000 310 075

## Beschreibung

Die Erfindung betrifft ein Fahrradschloss in Form eines so genannten Rahmenschlosses.

Bekannt sind ein manuelles Öffnen und Schließen eines Fahrradschlosses mittels eines Schlüssels oder eines Zahlencodes. Diese Methoden sind sehr umständlich und vor allem zeitaufwendig.

Eine elektromotorische Betätigung derartiger Fahrradschlösser ist generell unüblich. Anders als bei stationären Anordnungen - wie beispielsweise bei motorisch angetriebenen Tür- oder Tresorverriegelungen - wird der zum Schließen bzw. Verriegeln des Schlosses benötigte Kraftaufwand bei Fahrradschlössem vom Benutzer nämlich meist nicht als störend empfunden, und vor allem bewirken die bei stationären Anwendungen üblichen Getriebeverzahnungen zwischen Motor und Riegel Reibungsverluste, die sich bei einer mobilen Anordnung besonders nachteilig auf den ohnehin problematischen Energieverbrauch auswirken würden.

Aus der JP11278331A ist ein Fahrradschloss mit den Merkmalen des Oberbegriffs des Anspruchs 1 bekannt.

Die Aufgabe der Erfindung ist es, ein möglichst einfaches und energieeffizientes Abschließen und Öffnen des Fahrradschlosses zu ermöglichen.

Diese Aufgabe wird durch ein Fahrradschloss mit den Merkmalen des Anspruchs 1 gelöst.

Dem Schloss ist ein als Schlüssel dienender kodierter Sender zugeordnet, der ein entsprechendes Empfängermodul ansteuert, das am Fahrrad angebracht ist. Durch die Ansteuerung über Funk ist ein einfaches Abschließen und Öffnen des Fahrradschlosses möglich, und gleichzeitig wird dem Benutzer ein Zeitgewinn ermöglicht.

Ein Motor ermöglicht hierbei ein Schließen bzw. ein Öffnen des Schlosses. Hierfür wird der Schließbügel von dem Motor mittels eines Reibrades bewegt, wobei beispielsweise ein Riegelelement den Schließbügel in einer vorbestimmten Schließstellung gegen eine unbefugte Öffnungsbewegung sichern kann.

Durch die Verwendung eines Reibrades ergibt sich ein besonders verlustarmer Antrieb, beispielsweise im Vergleich zu bekannten Getriebekopplungen mit Geradverzahnung oder Schrägverzahnung. Die Verwendung eines Reibrades zum Antreiben des Schließbügels trägt auch erheblich zur Unfallsicherheit bei, da der Reibschluss zwischen dem Reibrad und dem Schließbügel ab einem gewissen Widerstand - beispielsweise wenn die Hand des Benutzers die Bewegung des Schließbügels unbeabsichtigt blockiert - in einen Kupplungsschlupf übergehen kann. Die Reibschlussverbindung zwischen Reibrad und Schließbügel kann also vorteilhaft als Rutschkupplung dienen. Ferner ist es bei einer besonders vorteilhaften Weiterbildung auch möglich, den Motor und das zum Antreiben des Schließbügels vorgesehene Reibrad zugleich zum Antreiben des genannten Riegelelements zu verwenden, wie nachfolgend noch näher erläutert wird.

Vorzugsweise verhindert ein Sicherungsstift, der beispielsweise mittels eines Hubmagneten oder mittels des genannten Motors betätigt wird, als Riegelelement ein unbefugtes Zurückschieben des Schließbügels bzw. ein unbefugtes Öffnen des Schlosses.

Das Empfängermodul steuert - beispielsweise mittels zweier Relais - den Motor und die Betätigung des Riegelelements.

Die Elektronik wird von einem Energiespeicher versorgt, beispielsweise von einem Akkumulator, der zum Beispiel die bereitgestellte Energie eines Nabendynamos im Vorderrad nutzt, insbesondere nachdem diese gleichgerichtet und stabilisiert worden ist.

Vorzugsweise kann das Schloss im spannungslosen Zustand ersatzweise manuell gegen eine Federkraft geschlossen sowie durch einen konventionellen Schlüssel geöffnet werden.

Das Gesamtgebilde der Schließvorrichtung ist am Fahrrad, beispielsweise am Rahmen des Hinterrads an der für Speichenschlösser vorgesehenen Halterung, befestigt.

Das elektronische Fahrradschloss ermöglicht in seiner Gesamtheit als System also ein einfaches, bequemes, komplikationsfreies und energieeffizientes Abschließen bzw. Öffnen.

Vorzugsweise kann das Schloss schon bei der Annäherung bzw. dem Entfernen mittels drahtloser Ansteuerung geöffnet bzw. geschlossen werden. Bei Verwendung einer RFID-Transpondertechnik oder dergleichen (z.B. Chip-Karte oder Bluetooth) ist das Schloss bei entsprechender Annäherung durch beispielsweise eine am Schloss angebrachte Taste ver- und entriegelbar. Mit anderen Worten dient auch in diesem Fall der Sender des vom Benutzer mitgeführten Transponders als Schlüssel, um durch entsprechende Ansteuerung des Empfängermoduls des Fahrradschlosses das Schloss für ein Öffnen bzw. Schließen freizugeben, wobei die Öffnungsbewegung bzw. Schließbewegung durch einen Tastendruck ausgelöst wird.

Insbesondere kann für das Entriegeln des Schlosses der folgende Ablauf vorgesehen sein: Der den Transponder mitführende Benutzer nähert sich dem Schloss und betätigt die Taste am Schloss. Hierdurch wird zunächst das Aussenden eines Code-Abfragebefehls mittels eines am Schloss vorgesehenen Senders ausgelöst. Dieser Code-Abfragebefehl wird von dem Transponder empfangen und veranlasst diesen, ein Code-Übermittlungssignal auszusenden. Das Code-Übermittlungssignal wird wiederum von dem Empfängermodul des Schlosses empfangen und auf Richtigkeit überprüft (z.B. durch Vergleich mit einem in einem nichtflüchtigen Speicher abgelegten Wert oder durch Ausführung eines Authentifizierungsalgorithmus). Im Falle eines positiven Prüfergebnisses steuert das Empfängermodul den Motor - ggf. nach oder mit einer Entriegelung des Schließbügels - im Sinne einer Öffnungsbewegung des Schließbügels an.

Die Erfindung wird nachfolgend beispielhaft anhand der Zeichnungen näher erläutert.
- Fig. 1: zeigt eine schematische Vorderansicht einer ersten Ausführungsform eines elektronischen Fahrradschlosses.
- Fig. 2: zeigt einen Schaltplan der Elektronik des Schlosses gemäß Fig. 1.
- Fig. 3: zeigt eine schematische Vorderansicht einer zweiten Ausführungsform eines elektronischen Fahrradschlosses.

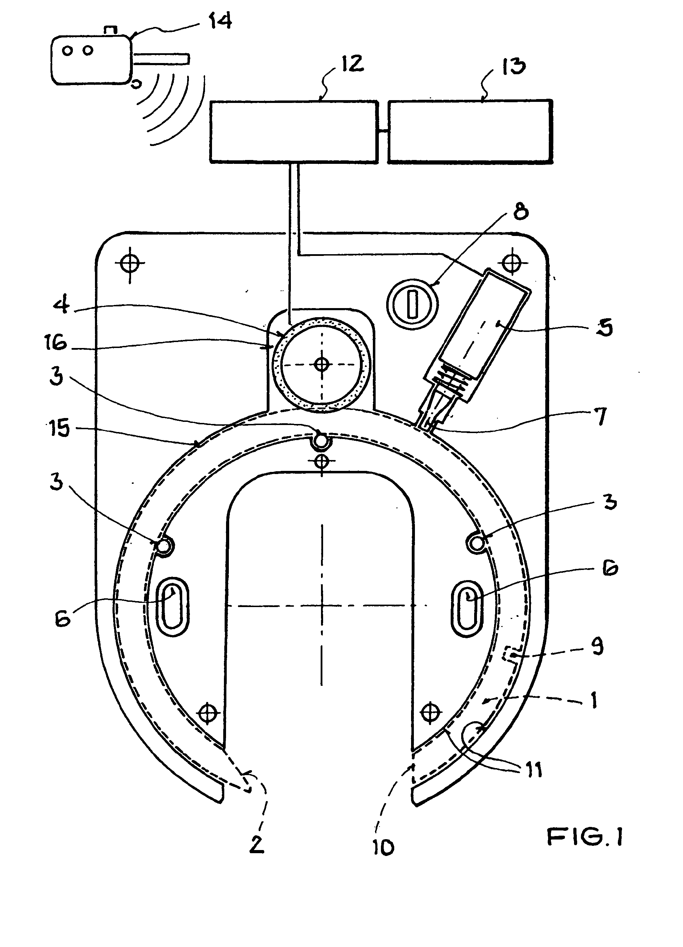

Das in Fig. 1 gezeigte Fahrradschloss besitzt innerhalb eines Gehäuses einen Schließbügel 1. Dieser ist mit einer geschliffenen Spitze 2 versehen, um bei einem Auftreffen auf eine Speiche diese zur Seite zu befördern. Des Weiteren ist der Schließbügel 1 gelagert, beispielsweise auf drei Rollen 3, damit er im Gehäuse widerstandsarm geführt ist. An dem Schließbügel 1 ist ein Führungsstift 10 vorgesehen, der beim Öffnen und Schließen des Schließbügels 1 mit einer Nut 11 zusammenwirkt und die Bewegung des Schließbügels 1 stabilisiert. Die Länge der Nut 11 definiert die Laufstrecke des Bügelstifts 10 und begrenzt die Vorwärts- und Rückwärtsbewegung des Schließbügels 1.

Ein Schließen bzw. ein Öffnen des Schließbügels 1 wird durch einen Motor 16 bewirkt, der mittels eines Reibrades 4 den Schließbügel 1 bewegt. Die dem Reibrad 4 zugewandte Fläche 15 des Schließbügels 1 ist aufgeraut, um Schlupf vorzubeugen.

Zur Sicherung des Schließbügels 1 ist im Gehäuse des Schlosses ein Hubmagnet 5 eingelassen. Aus diesem fällt im geschlossenen Zustand des Schließbügels 1 ein Riegelelement in Form eines Sicherungsstifts 7 aufgrund der Kraft einer an dem Sicherungsstift 7 befestigten Feder in eine dafür vorgesehene Längsbohrung 9 im Schließbügel 1. Hierdurch wird eine unbefugte Öffnung durch Fremdeinwirkung verhindert. Beim Öffnen wird der Hubmagnet 5 aktiviert, um den Sicherungsstift 7 nach oben zu ziehen.

Am Fahrrad wird das Schloss durch die für herkömmliche Speichenschlösser vorgesehenen Bohrungen am Rahmen befestigt. Für diese Befestigung sind im Schlossgebilde zwei Bohrungen 6 eingelassen.

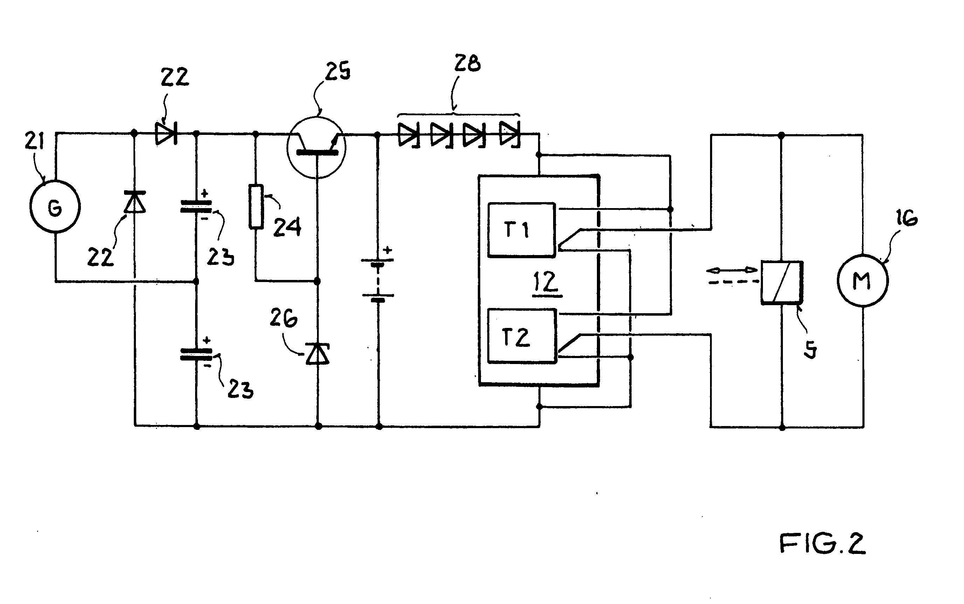

Gesteuert wird das elektronische Fahrradschloss durch ein zweikanaliges Funk-Sender/Empfängermodul. Dieses beinhaltet beispielsweise ein Empfängermodul 12 mit zwei Relais T₁, T₂ (Fig. 2), welche bei einer Aktivierung durch einen kodierten Sender 14 per Zeitsteuerung (t = 5s) den Motor 16 und den Hubmagneten 5 ansteuern. Der Sender ist seitlich vorzugsweise zusätzlich mit einem Taster versehen, um ein versehentliches Abschließen während der Fahrt zu verhindern.

Die Stromversorgung des Gesamtgebildes ist durch eine Energieversorgung, vorzugsweise einen Bleigel-Akku 13 gesichert. Dieser liefert die Energie, um alle Komponenten zu betreiben. Aufgeladen wird dieser Akkumulator 13 beispielsweise durch die bereitgestellte Energie eines sich im Vorderrad befindenden Nabendynamos 21. Eine Schaltung - wie beispielhaft in Fig. 2 gezeigt - bewirkt eine Gleichrichtung der Spannung mit einem konstanten Output knapp über der Spannung des Akkumulators 13.

Bei der Schaltung gemäß Fig. 2 liefert der Dynamo 21 eine Wechselspannung von beispielsweise 12 V. Diese wird durch zwei Dioden 22, zwei Kondensatoren 23 und einen Transistor 25 gleichgerichtet und vervielfacht, wobei ein Widerstand 24 zusammen mit einer Zener-Diode 26 den Transistor vorspannt. Diese Spannung lädt den Akkumulator 13. Die Spannung des Akkumulators 13 wird durch eine Reihenschaltung von vier Zener-Dioden 28 auf ca. 10,8 V begrenzt. Die beiden bereits genannten Relais T₁, T₂ des Empfängermoduls 12 ermöglichen eine Umpolung der Spannung.

Alternativ zu der Verwendung eines Akkumulators 13 ist beispielsweise ein Batteriebetrieb möglich.

Bei unzureichender Stromversorgung des Systems kann die Schließvorrichtung vorzugsweise durch einen Schlüssel mechanisch geöffnet und verschlossen werden. Der Antrieb des Schließbügels 1 und das Riegelelement (Sicherungsstift 7) werden dabei mittels eines Schließmechanismus 8 vom Schließbügel 1 gelöst.

Möglich ist auch eine Ansteuerung des Systems über ein Chip-Karten-System (z.B. RFID-Transpondertechnik) oder über ein Mobiltelefon (Bluetooth).

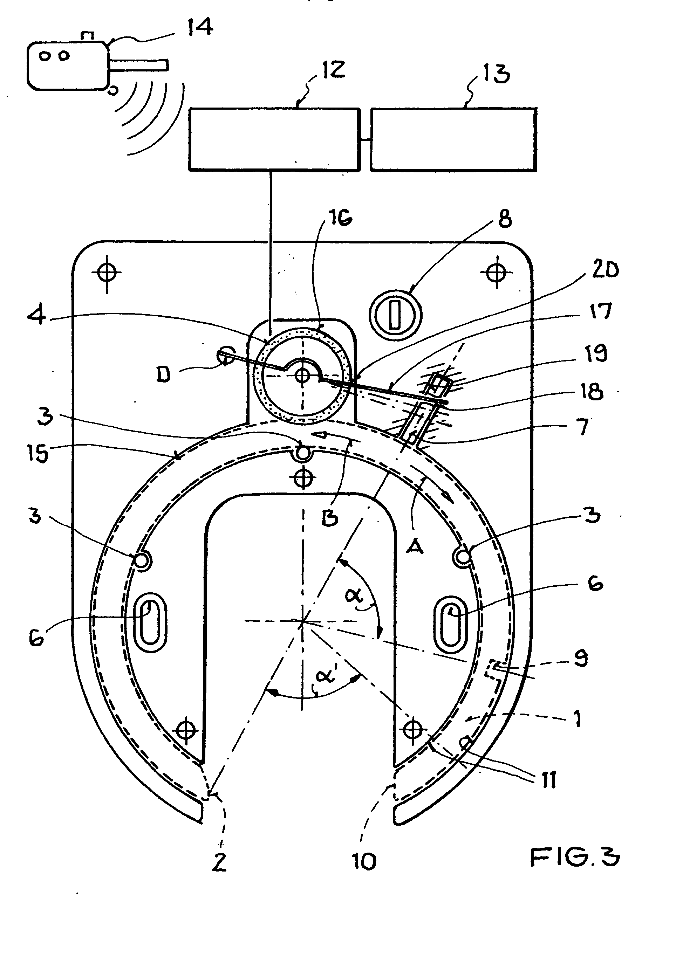

Bei der Ausführungsform gemäß Fig. 3 sind gleiche oder gleichartige Elemente wie in Fig. 1 und 2 mit denselben Bezugszeichen gekennzeichnet. Der wesentliche Unterschied zu der Ausführungsform gemäß Fig. 1 besteht darin, dass der Sicherungsstift 7 nicht mittels eines eigens hierfür vorgesehenen Hubmagneten, sondern mittels desselben Motors 16 bewegt wird, der auch den Schließbügel 1 antreibt.

Zu diesem Zweck ist ein federnd ausgebildetes Verbindungselement 17 vorgesehen, das mit einem Ende an einem Drehpunkt D schwenkbar gelagert ist und mit dem anderen Ende mit dem Sicherungsstift 7 gekoppelt ist, wobei der Sicherungsstift 7 hierfür eine Eingriffsausnehmung 18 besitzt und in einer Lagerung 19 axial beweglich geführt ist. Das Verbindungselement 17 besitzt einen beispielsweise als umgebogene Federzunge ausgebildeten Kontaktabschnitt 20, mit dem das Verbindungselement 17 an dem Reibrad 4 reibschlüssig anliegt, so dass über das Verbindungselement 17 und dessen Kontaktabschnitt 20 sowie über das Reibrad 4 der Sicherungsstift 7 indirekt mit dem Motor 16 reibschlüssig gekoppelt ist.

Dieser Reibschluss ist lösbar, um letztlich einer Rutschkupplung zu entsprechen. Hierdurch wird generell erreicht, dass während einer Öffnungsbewegung oder einer Schließbewegung des Schließbügels 1 zwischen dem Riegelelement (Sicherungsstift 7) und dem Motor 16 zeitweise ein (indirekter) Reibschluss herrscht, um das Riegelelement (Sicherungsstift 7) entlang einer Entriegelungsrichtung bzw. entlang einer Verriegelungsrichtung zu bewegen, und dass zeitweise zwischen dem Riegelelement (Sicherungsstift 7) und dem Motor 16 ein Kupplungsschlupf herrscht, um auch bei blockiertem Riegelelement (Sicherungsstift 7) den Schließbügel 1 mittels des Reibrades 4 bewegen zu können. Somit kann zum Bewegen sowohl des Schließbügels 1 als auch des Sicherungsstifts 7 ein einziger gemeinsamer Motor 16 verwendet werden. Dies wird anhand des speziellen Ausführungsbeispiels gemäß Fig. 3 im Folgenden näher erläutert.

Zunächst soll davon ausgegangen werden, dass der Schließbügel 1 geschlossen ist, wobei der Sicherungsstift 7 in die zugeordnete Bohrung 9 im Schließbügel 1 eingreift, um den Schließbügel 1 in der Schließstellung zu sichern. Wenn nun der Motor 16 im Öffnungssinn betätigt wird, d.h. wenn das Reibrad 4 sich bezogen auf die Darstellung gemäß Fig. 3 entgegen dem Uhrzeigersinn dreht, so wird der Sicherungsstift 7 aufgrund des Reibschlusses zwischen dem Kontaktabschnitt 20 des Verbindungselements 17 und dem Reibrad 4 und somit aufgrund einer entsprechend verursachten Schwenkbewegung des Verbindungselements 17 zunächst aus der Bohrung 9 heraus in Richtung einer Freigabe-Anschlagstellung bewegt, bis der Sicherungsstift 7 in axialer Richtung an der Lagerung 19 oder einem sonstigen Endanschlag anliegt. Nach Erreichen dieser Freigabe-Anschlagstellung geht die Reibschlussverbindung zwischen dem Kontaktabschnitt 20 des Verbindungselements 17 und dem Reibrad 4 - sofern die Rotation des Reibrades 4 andauert - in einen Kupplungsschlupf über, so dass der Sicherungsstift 7 in der genannten Freigabe-Anschlagstellung verbleibt. Somit ist der Schließbügel 1 entriegelt, und der Schließbügel 1 kann aufgrund der andauernden Rotation des Reibrades 4 eine Öffnungsbewegung A durchführen bzw. fortsetzen, bis der Schließbügel 1 schließlich geöffnet ist. Die Öffnungsstellung des Schließbügels 1 ist in Fig. 3 gezeigt.

Ausgehend von dieser Öffnungsstellung des Schließbügels 1 kann der Motor 16 durch entsprechende Ansteuerung mittels des Empfängermoduls 12 im Schließsinn betätigt werden, was in der Darstellung gemäß Fig. 3 einer Rotation des Reibrades im Uhrzeigersinn entspricht. Hierdurch wird zunächst bewirkt, dass der Schließbügel 1 eine Schließbewegung B durchführt, wobei zugleich aufgrund der reibschlüssigen Verbindung des Kontaktabschnitts 20 des Verbindungselements 17 mit dem Reibrad 4 und aufgrund einer entsprechenden Schwenkbewegung des Verbindungselements 17 der Sicherungsstift 7 axial in Richtung des Schließbügels 1 bewegt wird. Sobald der Sicherungsstift 7 die Oberfläche des Schließbügels 1 beaufschlagt und der Schließbügel 1 aufgrund seiner Kopplung mit dem weiterhin im Uhrzeigersinn rotierenden Reibrad 4 seine Schließbewegung B fortsetzt, geht der Reibschluss zwischen dem Kontaktabschnitt 20 des Verbindungselements 17 und dem Reibrad 4 zeitweise in einen Kupplungsschlupf über, d.h. der Sicherungsstift 7 wird mittels des federnden Verbindungselements 17 in Richtung des Schließbügels 1 gedrückt, ohne dessen Schließbewegung B zu behindern. Sobald sich nun die Bohrung 9 des Schließbügels 1 wieder auf Höhe des Sicherungsstifts 7 befindet, geht der erläuterte Kupplungsschlupf wieder in einen Reibschluss zwischen dem Kontaktabschnitt 20 des Verbindungselements 17 und dem Reibrad 4 über, so dass die andauernde Rotation des Reibrades 4 letztlich bewirkt, dass der Sicherungsstift 7 axial in die Bohrung 9 eingeführt wird. Der Schließbügel 1 nimmt nun wieder die Schließstellung ein.

Der Schließ- und Öffnungsweg der Riegelaufnahme (Längsbohrung 9) und der Bügelspitze 2 sind in Fig. 3 als Winkel α bzw. α' gekennzeichnet.

Die Steuerung des Motors 16 in Öffnungs- und/oder Schließrichtung kann über Endlagenabfragen am Schließbügel 1 bzw. entsprechende Kontaktschalter erfolgen (in den Figuren nicht gezeigt).

Ferner ist zu den gezeigten Ausführungsbeispielen anzumerken, dass auch eine zweite Bohrung 9 im Schließbügel 1 vorgesehen sein kann, die der Öffnungsstellung des Schließbügels 1 entspricht.

### Bezugszeichenliste

- 1: Schließbügel
- 2: Spitze des Schließbügels
- 3: Rolle
- 4: Reibrad
- 5: Hubmagnet
- 6: Bohrung
- 7: Sicherungsstift
- 8: Schließmechanismus
- 9: Längsbohrung
- 10: Bügelstift
- 11: Führungsnut
- 12: Empfängermodul
- 13: Akkumulator
- 14: Sender
- 15: angeraute Oberfläche
- 16: Motor
- 17: Verbindungselement
- 18: Eingriffsausnehmung
- 19: Lagerung
- 20: Kontaktabschnitt
- 21: Dynamo
- 22: Diode
- 23: Kondensator
- 24: Widerstand
- 25: Transistor
- 26: Zener-Diode
- 28: Zener-Dioden
- A: Öffnungsbewegung des Schließbügels
- B: Schließbewegung des Schließbügels
- D: Drehpunkt
- T₁: Relais
- T₂: Relais
- α: Öffnungs- bzw. Schließweg der Bohrung 9
- α': Öffnungs- bzw. Schließweg der Bügelspitze 2

## Patentansprüche

1. Elektronisches Fahrradschloss zur Befestigung am Rahmen des Hinterrads eines Fahrrads, mit:
- einem beweglichen Schließbügel (1);
- einem Motor (16) zum Vor- oder Zurückbewegen des Schließbügels, um das Schloss zu schließen oder zu öffnen; und
- einem über Funk ansteuerbaren Empfängermodul (12), das bei einer Aktivierung durch einen zugeordneten Sender (14) den Motor ansteuert,
**gekennzeichnet**
**durch** ein Reibrad (4), mittels dessen der Motor den Schließbügel bewegt.

2. Fahrradschloss nach Anspruch 1, **dadurch gekennzeichnet, dass** die dem Reibrad (4) zugewandte Lauffläche (15) des Schließbügels (1) aufgeraut ist, um Schlupf vorzubeugen.

3. Fahrradschloss nach einem der vorstehenden Ansprüche, **dadurch gekennzeichnet, dass** der Schließbügel (1) in einem Gehäuse des Fahrradschlosses gelagert und somit widerstandsarm geführt ist.

4. Fahrradschloss nach einem der vorstehenden Ansprüche, **dadurch gekennzeichnet, dass** der Schließbügel (1) einen Bügelstift (10) aufweist, der in einer Nut (11) eines Gehäuses des Fahrradschlosses geführt ist und die Bewegung des Schließbügels stabilisiert.

5. Fahrradschloss nach Anspruch 4, **dadurch gekennzeichnet, dass** die Länge der Nut (11) die Laufstrecke des Bügelstiftes (10) definiert und die Vorwärts- und Rückwärtsbewegung des Schließbügels (1) begrenzt.

6. Fahrradschloss nach einem der vorstehenden Ansprüche, **dadurch gekennzeichnet, dass** der Schließbügel (1) eine geschliffene Spitze (2) aufweist, um bei einem Auftreffen des Schließbügels auf eine Speiche diese zur Seite zu befördern.

7. Fahrradschloss nach einem der vorstehenden Ansprüche, **gekennzeichnet durch** ein Riegelelement (7), das in eine Riegelaufnahme (9) im Schließbügel (1) einführbar ist, um ein unbefugtes Öffnen des Schlosses zu verhindern.

8. Fahrradschloss nach Anspruch 7, **dadurch gekennzeichnet, dass** das Riegelelement als ein Sicherungsstift (7) und die Riegelaufnahme als eine Längsbohrung (9) im Schließbügel (1) ausgebildet sind.

9. Fahrradschloss nach einem der Ansprüche 7 oder 8, **dadurch gekennzeichnet, dass** das Riegelelement (7) durch Federkraft in die Riegelaufnahme (9) des Schließbügels (1) vordringt.

10. Fahrradschloss nach einem der Ansprüche 7 bis 9, **gekennzeichnet durch** einen Hubmagneten (5), der **durch** das Empfängermodul (12) ansteuerbar ist und **durch** den das Riegelelement (7) zurückfahrbar ist, um das Öffnen des Schlosses zu ermöglichen.

11. Fahrradschloss nach einem der Ansprüche 7 bis 9, **dadurch gekennzeichnet, dass** zum Bewegen des Schließbügels (1) und zum Betätigen des Riegelelements (7) ein einziger gemeinsamer Motor (16) vorgesehen ist.

12. Fahrradschloss nach Anspruch 11, **dadurch gekennzeichnet, dass** das Riegelelement (7) über einen lösbaren Reibschluss (4, 20) mit dem Motor (16) gekoppelt ist.

13. Fahrradschloss nach Anspruch 12, **dadurch gekennzeichnet, dass** das Riegelelement (7) indirekt mit dem Motor (16) lösbar reibschlüssig gekoppelt ist, insbesondere über das Reibrad (4) und/oder über ein Verbindungselement (17, 20).

14. Fahrradschloss nach einem der Ansprüche 12 oder 13, **dadurch gekennzeichnet, dass** das Riegelelement (7) derart mit dem Motor (16) gekoppelt ist, dass bei einer Betätigung des Motors im Öffnungssinn
- das Riegelelement (7) zunächst aufgrund eines Reibschlusses zwischen dem Riegelelement und dem Motor aus der Riegelaufnahme (9) heraus in Richtung einer Freigabe-Anschlagstellung bewegt wird, und
- nach Erreichen der Freigabe-Anschlagstellung während einer andauernden Öffnungsbewegung des Motors die Reibschlussverbindung zwischen dem Riegelelement und dem Motor in einen Kupplungsschlupf übergeht, so dass das Riegelelement (7) in der Freigabe-Anschlagstellung verbleibt.

15. Fahrradschloss nach einem der Ansprüche 12 bis 14, **dadurch gekennzeichnet, dass** das Riegelelement (7) derart mit dem Motor (16) gekoppelt ist, dass bei einer Betätigung des Motors im Schließsinn
- das Riegelelement (7) zunächst aufgrund einer reibschlüssigen Verbindung mit dem Motor in Richtung des Schließbügels (1) bewegt wird,
- der Reibschluss zwischen dem Riegelelement und dem Motor - sobald das Riegelelement an dem Schließbügel anliegt und der Schließbügel weiter im Schließsinn bewegt wird - in einen Kupplungsschlupf übergeht, und
- das Riegelelement (7) - sobald die Riegelaufnahme (9) des Schließbügels sich auf Höhe des Riegelelements befindet - aufgrund eines sich neuerlich einstellenden Reibschlusses zwischen dem Riegelelement und dem Motor in die Riegelaufnahme bewegt wird.

16. Fahrradschloss nach einem der Ansprüche 7 bis 15, **dadurch gekennzeichnet, dass** das Riegelelement (7) zur Ent- oder Verriegelung mechanisch durch einen Schlüssel betätigbar ist.

17. Fahrradschloss nach einem der vorstehenden Ansprüche, **dadurch gekennzeichnet, dass** das Schloss eine Taste aufweist und dass dem Schloss ein Transponder zugeordnet ist, wobei das Schloss mit dem Transponder dergestalt zusammenwirkt, dass das Schloss bei einer Annäherung des Transponders durch Betätigung der Taste entriegelbar ist.

## Claims

1. An electronic bicycle lock for securing to the frame of the rear wheel of a bicycle, comprising:
- a movable locking hoop (1);
- a motor (16) for moving the locking hoop forwards and backwards to close or to open the lock; and
- a receiver module (12) which can be controlled via radio and which controls the motor on activation by an associated transmitter (14),
**characterised**
**by** a friction wheel (4) by means of which the motor moves the locking hoop.

2. A bicycle lock in accordance with claim 1, **characterised in that** the running surface (15) of the locking hoop (1) facing the friction wheel (4) is roughened to prevent slip.

3. A bicycle lock in accordance with one of the preceding claims, **characterised in that** the locking hoop (1) is supported in a housing of the bicycle lock and is thus guided with low resistance.

4. A bicycle lock in accordance with any one of the preceding claims, **characterised in that** the locking hoop (1) has a hoop pin (10) which is guided in a groove (11) of a housing of the bicycle lock and stabilises the movement of the locking hoop.

5. A bicycle lock in accordance with claim 4, **characterised in that** the length of the groove (11) defines the running path of the hoop pin (10) and bounds the forwards and backwards movement of the locking hoop (1).

6. A bicycle lock in accordance with any one of the preceding claims, **characterised in that** the locking hoop (1) has a ground tip (2) to convey the locking hoop to the side if the locking hoop impacts a spoke.

7. A bicycle lock in accordance with any one of the preceding claims, **characterised by** a latch element (7) which can be introduced into a latch receiver (9) in the locking hoop (1) to prevent any unauthorised opening of the lock.

8. A bicycle lock in accordance with claim 7, **characterised in that** the latch element is made as a securing pin (7) and the latch receiver is made as an elongate bore (9) in the locking hoop (1).

9. A bicycle lock in accordance with one of the claims 7 or 8, **characterised in that** the latch element (7) penetrates into the latch receiver (9) of the locking hoop (1) by spring force.

10. A bicycle lock in accordance with any one of the claims 7 to 9, **characterised by** a solenoid (5) which can be controlled by the receiver module (12) and can be retracted by the latch element (7) to allow the opening of the lock.

11. A bicycle lock in accordance with any one of the claims 7 to 9, **characterised in that** a single common motor (16) is provided for moving the locking hoop (1) and for actuating the latch element (7).

12. A bicycle lock in accordance with claim 11, **characterised in that** the latch element (7) is coupled to the motor (16) via a releasable friction locking (4, 20).

13. A bicycle lock in accordance with claim 12, **characterised in that** the latch element (7) is indirectly, releasably coupled with friction locking to the motor (16), in particular via the friction wheel (4) and/or via a connection element (17, 20).

14. A bicycle lock in accordance with one of the claims 12 or 13, **characterised in that** the latch element (7) is coupled to the motor (16) such that, on an actuation of the motor in the opening sense
- the latch element (7) is first moved out of the latch receiver (9) in the direction of a release abutment position due to a friction locking between the latch element and the motor; and
- after reaching the release abutment position, the friction locking connection between the latch element and the motor moves into a clutch slip during an ongoing movement of the motor so that the latch element (7) remains in the release abutment position.

15. A bicycle lock in accordance with any one of the claims 12 to 14, **characterised in that** the latch element (7) is coupled to the motor (16) such that, on an actuation of the motor in the closing sense
- the latch element (7) is first moved in the direction of the locking hoop (1) due to a friction-locking connection with the motor;
- the friction locking between the latch element and the motor moves into a clutch slip - as soon as the latch element contacts the locking hoop and the locking hoop is moved further in the closing sense - and
- the latch element (7) is moved into the latch receiver on the basis of a friction locking which is again adopted between the latch element and the motor - as soon as the latch receiver (9) of the locking hoop is located at the level of the latch element.

16. A bicycle lock in accordance with any one of the claims 7 to 15, **characterised in that** the latch element (7) can be actuated mechanically by a key for unlocking or locking.

17. A bicycle lock in accordance with any one of the preceding claims, **characterised in that** the lock has a button; and **in that** a transponder is associated with the lock, with the lock cooperating with the transponder such that the lock can be unlocked by actuation of the button on an approach of the transponder.

## Revendications

1. Verrou électronique pour bicyclette destiné à être fixé sur le cadre de la roue arrière d'une bicyclette, comprenant :
- un arceau de fermeture mobile (1) ;
- un moteur (16) pour déplacer en avance ou en recul l'arceau de fermeture, afin de fermer ou d'ouvrir le verrou ; et
- un module récepteur (12) capable d'être piloté par radio, qui pilote le moteur lors d'une activation par un émetteur associé (14),
**caractérisé par** une roulette à friction (4) au moyen de laquelle le moteur déplace l'arceau de fermeture.

2. Verrou de bicyclette selon la revendication 1, **caractérisé en ce que** la surface de roulement (15), tournée vers la roulette à friction (4), de l'arceau de fermeture (1) est rugueuse, afin de prévenir un glissement.

3. Verrou de bicyclette selon l'une des revendications précédentes, **caractérisé en ce que** l'arceau de fermeture (1) est monté dans un boîtier du verrou de bicyclette et est ainsi guidé avec faible résistance.

4. Verrou de bicyclette selon l'une des revendications précédentes, **caractérisé en ce que** l'arceau de fermeture (1) comprend un embout d'arceau (10), qui est guidé dans une gorge (11) d'un boîtier du verrou de bicyclette et qui stabilise le mouvement de l'arceau de fermeture.

5. Verrou de bicyclette selon la revendication 4, **caractérisé en ce que** la longueur de la gorge (11) définit le trajet de déplacement de l'embout d'arceau (10) et limite le mouvement d'avance et de recul de l'arceau de fermeture (1).

6. Verrou de bicyclette selon l'une des revendications précédentes, **caractérisé en ce que** l'arceau de fermeture (1) comprend une pointe meulée (2) afin de déplacer un rayon vers le côté lors d'une rencontre de l'arceau de fermeture avec celui-ci.

7. Verrou de bicyclette selon l'une des revendications précédentes, **caractérisé par** un élément de verrouillage (7) qui peut être introduit dans un logement de verrouillage (9) de l'arceau de fermeture (1) afin d'empêcher une ouverture non autorisée du verrou.

8. Verrou de bicyclette selon la revendication 7, **caractérisé en ce que** l'élément de verrouillage est réalisé sous forme d'un ergot de blocage (7), et le logement de verrouillage est réalisé sous forme d'un perçage oblong (9) dans l'arceau de fermeture (1).

9. Verrou de bicyclette selon l'une des revendications 7 ou 8, **caractérisé en ce que** l'élément de verrouillage (7) pénètre dans le logement de verrouillage (9) de l'arceau de fermeture (1) sous la force d'un ressort.

10. Verrou de bicyclette selon l'une des revendications 7 à 9, **caractérisé par** un aimant de levage (5), qui peut être piloté par le module récepteur (12), et au moyen duquel l'élément de verrouillage (7) peut être reculé pour permettre l'ouverture du verrou.

11. Verrou de bicyclette selon l'une des revendications 7 à 9, **caractérisé en ce qu'**il est prévu un unique moteur commun (16) pour déplacer l'arceau de fermeture (1) et pour actionner l'élément de verrouillage (7).

12. Verrou de bicyclette selon la revendication 11, **caractérisé en ce que** l'élément de verrouillage (7) est accouplé au moteur (16) via une coopération à friction (4, 20) susceptible d'être annulée.

13. Verrou de bicyclette selon la revendication 12, **caractérisé en ce que** l'élément de verrouillage (7) est accouplé indirectement au moteur (16) via une coopération à friction susceptible d'être annulée, en particulier via la roulette à friction (4) et/ou via un élément de liaison (17, 20).

14. Verrou de bicyclette selon l'une des revendications 12 ou 13, **caractérisé en ce que** l'élément de verrouillage (7) est accouplé avec le moteur (16) d'une manière telle que lors d'un actionnement du moteur dans le sens d'ouverture :
- l'élément de verrouillage (7) est tout d'abord déplacé, en raison d'une coopération à friction entre l'élément de verrouillage et le moteur, en sortant du logement de verrouillage (9) en direction d'une position de butée de libération, et
- après avoir atteint la position de butée de libération pendant une poursuite du mouvement d'ouverture du moteur, la liaison à coopération de friction entre l'élément de verrouillage et le moteur se transforme en un glissement d'accouplement, de sorte que l'élément de verrouillage (7) demeure dans la position de butée de libération.

15. Verrou de bicyclette selon l'une des revendications 12 à 14, **caractérisé en ce que** l'élément de verrouillage (7) est accouplé avec le moteur (16) d'une manière telle que lors d'un actionnement du moteur dans le sens de fermeture :
- l'élément de verrouillage (7) est tout d'abord déplacé, en raison d'une coopération à friction avec le moteur, en direction de l'arceau de fermeture (1),
- la coopération à friction entre l'élément de verrouillage et le moteur, dès que l'élément de verrouillage est appliqué contre l'arceau de fermeture et que l'arceau de fermeture est déplacé plus loin dans le sens de fermeture, se transforme en un glissement d'accouplement, et
- l'élément de verrouillage (7), dès que le logement de verrouillage (9) de l'arceau de fermeture se trouve à la hauteur de l'élément de verrouillage, est déplacé en entrant dans le logement de verrouillage en raison d'un rétablissement de la coopération à friction entre l'élément de verrouillage et le moteur.

16. Verrou de bicyclette selon l'une des revendications 7 à 15, **caractérisé en ce que** l'élément de verrouillage (7) peut être actionné mécaniquement par une clé pour le déverrouillage ou pour le verrouillage.

17. Verrou de bicyclette selon l'une des revendications précédentes, **caractérisé en ce que** le verrou comprend une touche, et **en ce qu'**un transpondeur est associé au verrou, le verrou coopérant avec le transpondeur de telle façon que lors d'une approche du transpondeur le verrou peut être déverrouillé par actionnement de la touche.
